# EUROPEAN PATENT APPLICATION

(11) **EP 1 357 509 A1**
(43) Date of publication of application: **29.10.2003**
(21) Application number: 02009107.0
(22) Date of filing: 24.04.2002
(51) Int. Cl.: G06K 11/18

(54) **Position indicator for office automation equipment**

(71) Applicant: Katsuya Masao, Tokyo 191-0001 (JP)
(72) Inventor: Katsuya Masao, Tokyo 191-0001 (JP)
(74) Representative: Käck, Jürgen

(57) **Abstract**

The present invention discloses a method for performing a graphic input for such OA equipment as computers and game machines.

This invention includes a movement of a position indicator (1), in which pressure sensors (2) made of elastic film are contained.

When the position indicator (1) is moved in the air circumstance, the elastic film bends along the movement. The spatial movement of the position indicator (1) is calculated by measuring each pressure sensor output, and then calculated results are inputted into the computer. To avoid the external disturbance such as wind, the pressure sensors are covered.

The invention possesses the function of interchangeability at upper levels of existing position indicators especially mouse, as well as cost-effectiveness and mass productivity.

## Description

### BACKGROUND OF THE INVENTION

### (1) Field of the Invention

The present invention relates to a position indicator for such OA equipment as computers and game machines, and to a method enabling the graphic input. Specifically, the invention relates to a method enabling 3D graphic designs or three-dimensional movements to be indicated like game machines by moving the position indicator.

### (2) Description of the Related Art

The existing two-dimensional position indicators such as mouse, which have been widely used, have a limitation in performing three-dimensional imaging expressions. In addition, its users have been requested to let a device to touch a plane for input due to its touch method. It does considerable harm to human muscles. A known example of the prior art relating to a three-dimensional position indicator is Rabb, Blood, Steiner and Jones "Magnetic Movement and Orientation Tracking System" IEEE. Transaction on Aerospace and Electronic Systems. AES-15, no. 5, September 1979, pp262-270. In this prior art, with respect to multiple coils fixed in space and coils movable in space, movements of movable coil in space are detected by measuring the mutual intervention of electromagnetic fields mutually provided by both types of coils (fixed in space and movable). Instead of the electromagnetic field, a sound wave can also be used in performing the same measurement. Since this technology restricts its user's working posture to the reference coordinates, the burden towards the user's posture is severe.

Another device includes multiple accelerometers in a position indicator to detect human movements. In this case, since only a change in the movements is outputted, accuracy decreases extremely as for the low speed movements or the constant speed movements.

Conversely, the present invention needs no external reference coordinates. A distinctive technical feature of our invention is to measure the movement velocity of human activities. It is also intended to possess the function of interchangeability at upper levels of existing mouse as well as cost-effectiveness and mass productivity.

### SUMMARY OF THE INVENTION

The object of the present invention is to provide a method for performing graphic input for such OA equipment as computers and game machines. To achieve this objective, a position indicator of the invention includes pressure sensors, orientated as directing with XYZ axes. To avoid the external disturbance, such as wind made by air conditioner, the pressure sensors are attached with cover having multiple minute holes. The pressure sensors are connected with the air through the minute holes made on this cover. The main component of the pressure sensors of our invention is an elastic film. When a position indicator is moved, the elastic film pushes air and makes the local flow of the momentum of the air, and its reaction becomes the mechanical stress applied to the elastic film. Then, the mechanical stress is detected as a voltage by the electronic means.

More than one pressure sensor should be installed in the independent direction to each other corresponding to a degree of freedom in the movement direction. When this position indicator is used, it can be moved freely within the environment. The three-dimensional movement of the position indicator is calculated by measuring the output of each pressure sensor.

### BRIEF DESCRIPTION OF THE DRAWINGS

Figure 1 is an explanatory drawing showing the overall structure of the position indicator of the present invention.
Figure 2 is an explanatory drawing showing the structure in which the Eular's angle of the position indicator can be measured.
Figure 3 is an explanatory drawing showing the structure of the pressure sensor used in the invention.
Figure 4 is an explanatory drawing showing the way to double covers in order to prevent the influence of winds from the outside.
Figure 5 is an explanatory drawing showing the structure in which a piezoelectric film is installed on a soft material to reduce the influence of the vibration.
Figure 6 is an explanatory drawing showing the structure in which the front side and the back side of a piezoelectric film are constituted as they may face in the outside and stand opposite to each other.
Figure 7 is an explanatory drawing showing the structure in which a piezoelectric film is being bent in the S letter-shaped.
Figure 8 is an explanatory drawing showing the structure in which a film, which is made of the material with good elasticity and rigidity, and a piezoelectric film are joined into one in double-sided structure.
Figure 9 is an explanatory drawing showing the structure in which a film and a piezoelectric film are joined into one in single-sided structure.
Figure 10 is an explanatory drawing showing another structure of a pressure sensor, which can be detected by the optical means.
Figure 11 is an explanatory drawing showing another structure of a pressure sensor, which is made of silicone by etching process.

### DESCRIPTION OF THE REFERRED EMBODIMENTS

In this description, the same numbers indicate parts of the same or similar functions.

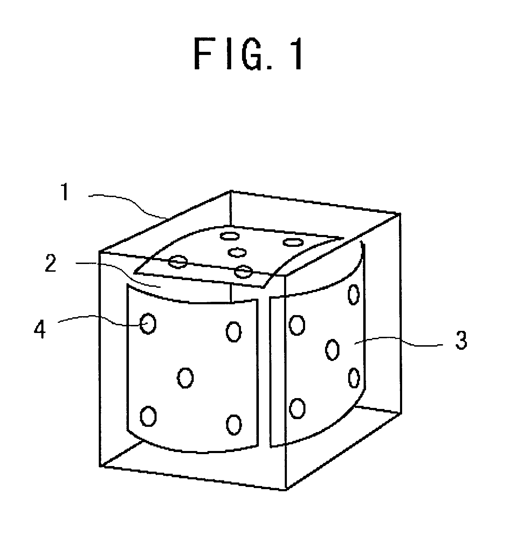

Figure 1 shows the overall structure of the invention. Position indicator 1 of the invention includes Pressure sensors 2, orientated as directing with XYZ axes. To avoid the external disturbance, such as wind made by air conditioner, Pressure sensors 2 are attached with Cover 3, having multiple Minute holes 4. Pressure sensors 2 are connected with the air through these Minute holes 4. The main component of the Pressure sensor 2 is an elastic film 6. When Position indicator 1 is moved in the air, elastic film 6 pushes the air, makes the local flow of the momentum of the air, and takes out the reaction as a voltage. The direction of this mechanical stress vector depends on the movement direction of Position indicator 1, the form of an elastic film 6, and the arrangement of minute holes 4 made on a cover 3. The magnitude of the mechanical stress vector is the function of the velocity and the acceleration of movements of the position indicator 1, and it is in proportion to the movement velocity at the low speed movement, in comparison with the sound speed in the air. In this way, the voltage which is in proportion to the velocity of movement can be taken out. Therefore, the accuracy at low or constant speed movement is also ensured.

A positive movement velocity in one direction can be detected by one Pressure sensor 2. Therefore, two Pressure sensors 2 are installed in the one for the reverse to each other for the movement direction, which is to be detected. In order to know the three-dimensional movement of Position indicator 1, these should be combined along the XYZ coordinates. It is called a sensor unit.

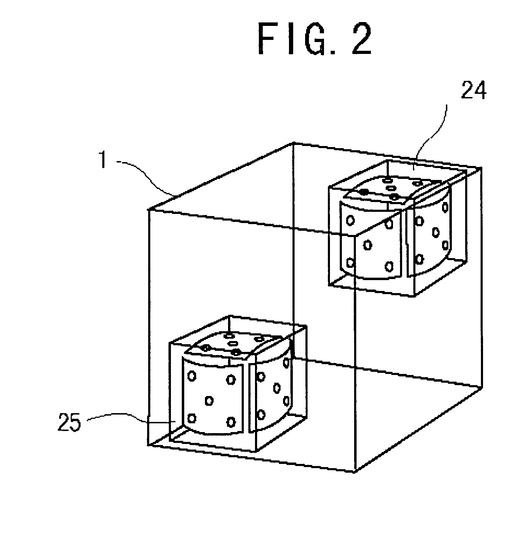

Two sensor units are installed with suitable space between them in Position indicator 1 in order to detect not only translation but also the rotation of Position indicator 1. Figure 2 shows the structure in which Sensor unit 24 and 25 are put diagonally on the corners of Position indicator 1 in order to make it possible to measure the Eular's angle of Position indicator 1.

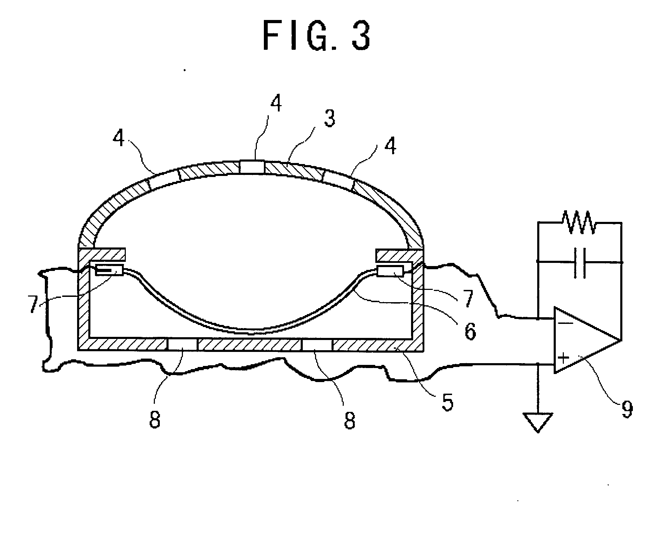

Figure 3 shows the structure of Pressure sensor 2 used in the invention. In Case 5, Polymer piezoelectric film 6 with electrodes on both sides is installed. Piezoelectric film 6 produces surface charge when the mechanical stress is applied. Cover 3 with Minute holes 4 is attached in front of Piezoelectric film 6. The sectional form of Cover 3 is almost a spherical form. Cover 3 protects Piezoelectric film 6 from the external disturbance such as wind made by air conditioner. Since Piezoelectric film 6 shows the maximum piezoelectric effect towards the mechanical stress in the direction of stretch, Piezoelectric film 6 should be installed to Connector 7 as it would be sagged so that the element of the mechanical stress in the direction of stretch would increase. Besides, this installation form is the form, which can provide great momentum to the air. Piezoelectric film 6 is stretched with the suitable tension not to be sagged with the influence of the gravity. When Pressure sensor 2 is moved in the air, Piezoelectric film 6 pushes the air, and a surface charge occurs on Piezoelectric film 6 due to its reaction. The output of low speed movement is in proportion to the movement velocity. The air pushed by Piezoelectric film 6 is pushed out to the outside through Minute holes 4 made on Cover 3. The air pushed out is replenished through Another holes 8, and smooth flow of the air occurs inside the sensor. The surface charge occurred on Piezoelectric film 6 is changed into the voltage by Charge amplifier 9. The output of Charge amplifier 9 indicates a relative movement velocity of Pressure sensor 2 and the air.

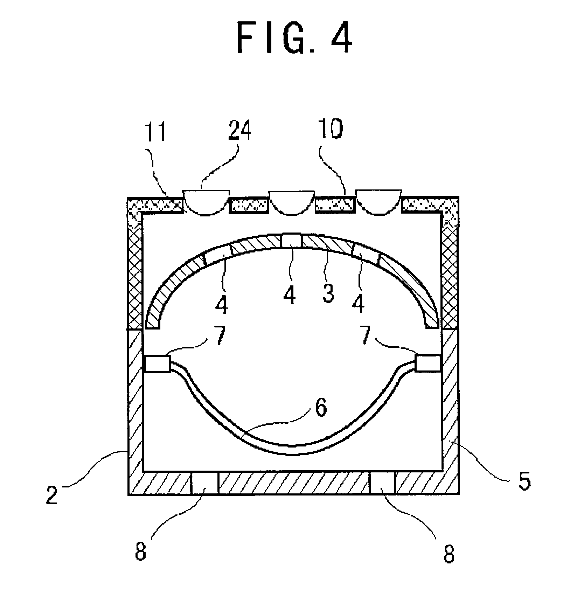

Figure 4 shows the way to double the covers in order to prevent the influence of winds from the outside. In other words, Second cover 10 is installed outside Cover 3 attached to Pressure sensor 2. The diameter of Multiple holes 11 is bigger than that of Minute holes 4 made on Cover 3. The shape of Multiple holes 11 is almost a square, and Multiple holes 11 have spherical convex Lids 24 attached to them. The air pushed out through Cover 3 flows along the smooth curve of Lids 24 and then goes out towards the open air through the narrow space between Lids 24 and Multiple holes 11. The wind existing in the outside environment cannot go into the box so easily for Lids 24 are attached as they cover Multiple holes 11. Thus, the influence of the external disturbance such as wind can be minimized by setting up holes in double phases. The body of Position indicator 1 itself can be used as an outer cover, Second cover 10.

The output of Piezoelectric film 6 is influenced by an angle between the film and the movement direction, and it becomes the biggest when that angle is right-angled. The fact explained in the above and the arrangement of Minute holes 4 made on Cover 3 decide the pointing of this Pressure sensor 2.

The form of Piezoelectric film 6 or the way to install the film etc. can be devised variously under the above fundamental constitutions.

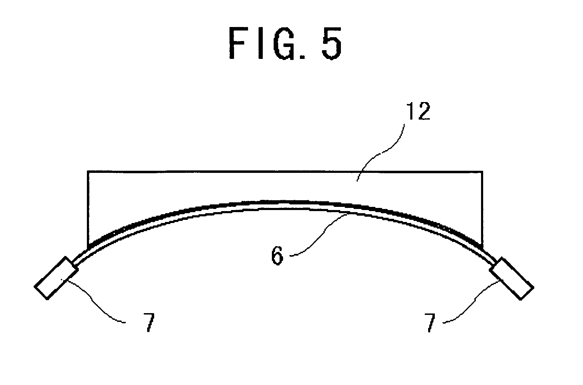

Figure 5 shows the structure in which Piezoelectric film 6 is installed on a soft material like Styrofoam 12. In this way, the influence due to the vibration to Pressure sensor 2 can be reduced.

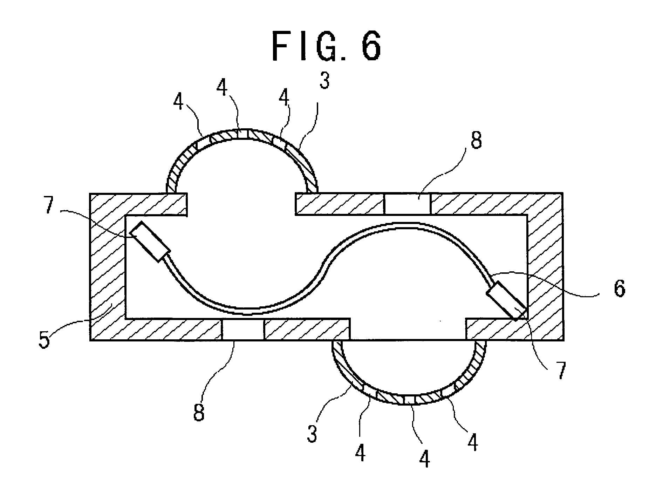

Figure 6 shows the structure in which the front side and the back side of Piezoelectric film 6 are constituted as they may face in the outside and stand opposite to each other. The direction of the mechanical stress varies with the plus and minus of the direction of the movement, and the sign of charge which occurs by it becomes reverse. Therefore, in this case, the movement velocity of the plus and minus can be detected with one Pressure sensor 2.

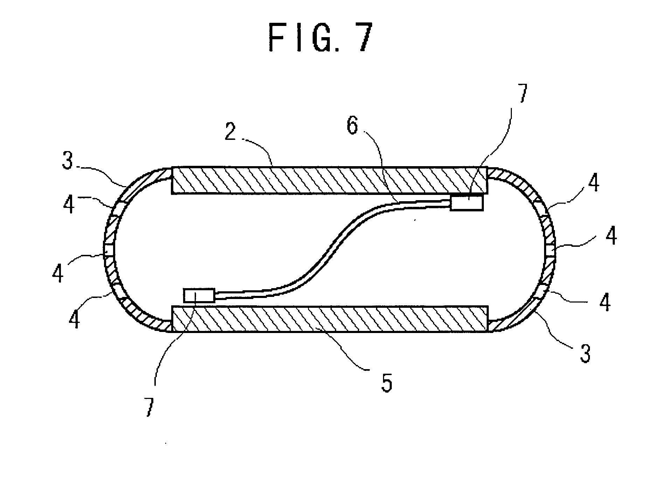

Figure 7 shows the structure in which Piezoelectric film 6 is being bent in the S letter-shaped. Covers 4 are installed to both sides of Case 5. This structure also ensures the same effect shown in Fig. 6, that is the movement velocity of the plus and minus can be detected with one Pressure sensor 2.

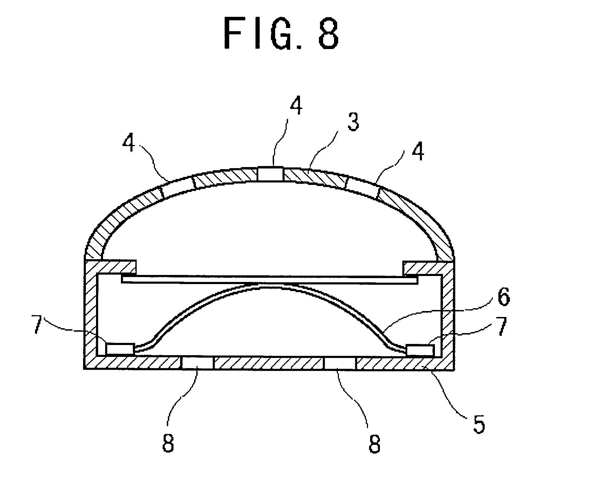

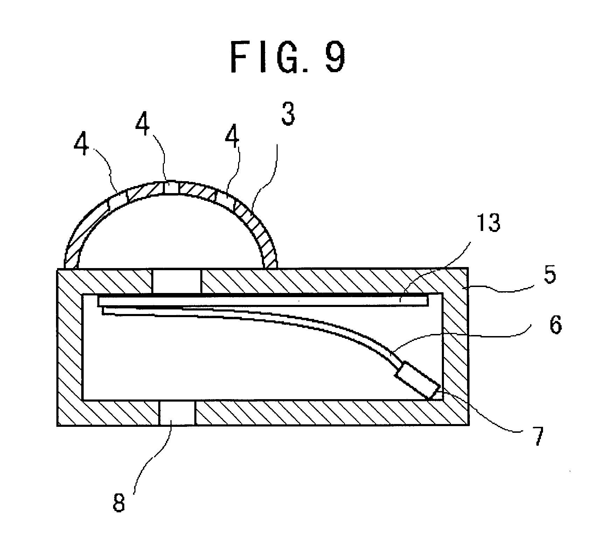

It is possible to make a distinction between parts pushing air and parts generating a voltage. Figure 8 and Figure 9 show the structure in which Film 13 and Piezoelectric film 6 are joined into one. Film 13 which fills the role of pushing air is made of the material with good elasticity and rigidity which is hard to be twisted. In Fig. 8, Film 13 is installed in Case 5 in double-sided structure while it is installed in single-sided structure in Fig. 9. Film 13 is glued to Piezoelectric film 6 at the point where the wind pressure is received in. The deflection of Film 13 made by the wind pressure is transmitted to Piezoelectric film 6 from the point. Since this structure prevents Piezoelectric film 6 from twisting, the direction of the movement velocity vector of Position indicator 1 can be taken out purely, and it becomes resistant to the vibration. The influence of the electromagnetic noise can be reduced if the surface of Film 13 is made conductive and connected to the ground.

The deformation of an elastic film caused by the movement of Position indicator 1 can also be detected by the optical means.

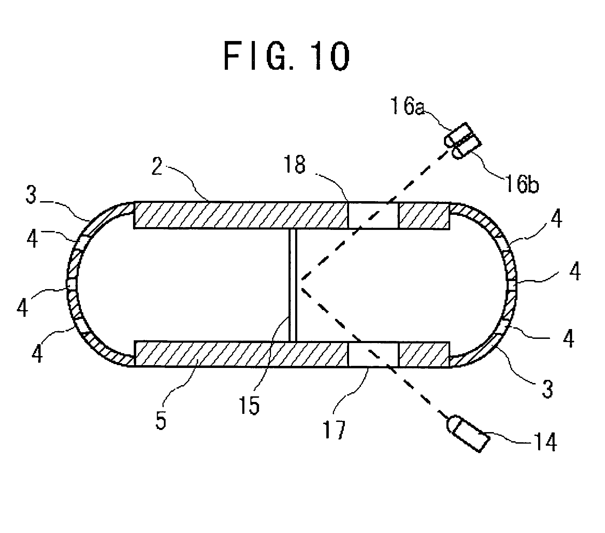

Figure 10 shows another structure of Pressure sensor 2 used in this invention. Pressure sensor 2 is composed of LED 14, Elastic film 15 and Photo sensor 16a and 16b, and Case 5. Window 17 and 18 through which light can pass are made in Case 5. The light emitted from LED 14 is radiated towards Elastic film 15 which fills the role as the reflection board through Window 17. Its reflected light passes through Window 18 and reaches Photo sensor 16a and 16b.

When Position indicator 1 is moved, Elastic film 15 pushes air and becomes sagged due to its reaction.

Since the optical way of the reflected light is changed due to the deflection of Elastic film 15, a balance of the output of Photo sensor 16a and 16b collapses. Therefore, the movement of Position indicator 1 can be known.

Silicone is the material suitable to be used in making an elastic film used in this invention. The deflection which occurs in the silicone film due to the reaction with the air can be measured as a change in the capacity or the resistance value.

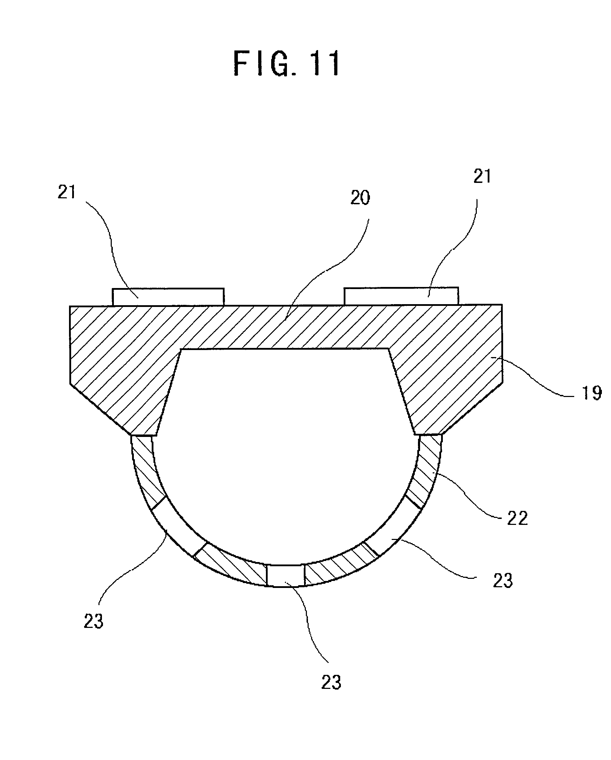

Figure 11 shows another structure of Pressure sensor 2. Thin part 20 in Silicon substrate 19 is established by etching process. Piezo resistive elements 21 are set up near Thin part 20. Thin part 20 is covered by Cover 22 on which many Minute holes 23 are made.

When Position indicator 1 is moved in the air, Thin part 20 receives the reaction of the air, and the resistance value of Piezo resistive elements 21 is changed by its mechanical stress.

## Claims

1. A position indicator for performing a graphic input for such OA equipment as computers by moving the position indicator in the air, comprising: a pressure sensor to detect a reaction of air due to the movement of the position indicator.

2. The position indicator of Claim 1, wherein the pressure sensor comprised in the position indicator comprises an elastic film to push the air.

3. The position indicator of Claim 2, wherein the elastic film forms concavity to provide the maximum momentum to the air.

4. The position indicator of Claim 1, wherein the pressure sensor comprises a cover comprising minute holes in the front to prevent the pressure sensor from wind.

5. The position indicator of Claim 1, wherein the pressure sensor comprises holes on the back to make the air flow smoothly.

6. The position indicator of Claim 4, wherein the cover comprises a cover comprising another holes on the outside to prevent the pressure sensor from wind.

7. The position indicator of Claim 2, wherein the elastic film is comprised of a piezoelectric film having a piezoelectric effect.

8. The position indicator of Claim 7, wherein the piezoelectric film is glued to another film, comprised of a material with good elasticity and rigidity, which fills a role of pushing air.

9. The position indicator of Claim 2, wherein the reaction of the air due to the movement of the position indicator is calculated by measuring a change in an output of a photo sensor which receives a reflected light of a light emitted towards the elastic film.

10. The position indicator of Claim 2, wherein the elastic film is comprised of a silicon, a piezo resistive element is set near the elastic film and a deflection occurred by the elastic film pushing the air is measured by a change in a resistance value of the piezo resistive element.
